# EUROPÄISCHE PATENTSCHRIFT

(11) **EP 3 707 370 B1**
(45) Veröffentlichungstag und Bekanntmachung des Hinweises auf die Patenterteilung: **01.09.2021**
(21) Anmeldenummer: 18800571.4
(22) Anmeldetag: 06.11.2018
(51) Int. Cl.: F03B 17/00, F03B 5/00

(54) **STRÖMUNGSMASCHINE ZUM BEREITSTELLEN VON ELEKTRISCHER ENERGIE**
CONTINUOUS FLOW MACHINE FOR PROVIDING ELECTRICAL ENERGY
TURBOMACHINE DESTINÉE À FOURNIR DE L'ÉNERGIE ÉLECTRIQUE

(30) Priorität: 06.11.2017 DE 102017125879
(43) Veröffentlichungstag der Anmeldung: 16.09.2020
(73) Patentinhaber: Suadicani, Robert, 85716 Unterschleißheim (DE)
(72) Erfinder: Suadicani, Robert, 85716 Unterschleißheim (DE)
(74) Vertreter: HGF
(86) Internationale Anmeldenummer: PCT/EP2018/080349
(87) Internationale Veröffentlichungsnummer: WO 2019/086714

(56) Entgegenhaltungen:
- WO-A2-2015/145185
- FR-A- 542 461
- US-A- 4 272 685
- US-A- 4 382 746
- REYNOLDS P: "HYDROPOWER - NATURALLY?", INTERNATIONAL WATER POWER & DAM CONSTRUCT, XX, XX, Bd. 47, Nr. 6, 1. Juni 1995 (1995-06-01), Seite 48, XP008030578, ISSN: 0306-400X

## Beschreibung

Die vorliegende Erfindung betrifft eine Strömungsmaschine zum Bereitstellen von elektrischer Energie.

Eine Turbine kann ausgebildet sein, um Wasserkraft nutzbar zu machen. Dabei wird kinetische Energie und/oder potentielle Energie des Wassers mittels der Turbine in Rotationsenergie umgewandelt, was die Drehung einer Turbinenwelle bewirkt. Zumeist wird diese Drehbewegung zum Antreiben eines Generators genutzt, um Strom zu erzeugen.

Um einen optimalen Wirkungsgrad zu erzielen, muss die Turbine den unterschiedlichen Fallhöhen und Wasserdurchflussmengen angepasst sein. Ein Speicherkraftwerk im Gebirge braucht demnach eine andere Turbine als ein Laufwasserkraftwerk an einem Fluss.

Wasserturbinen werden mit Leistungen von etwa 200 Watt bis hin zu tausend Megawatt ausgeführt. Die Turbinen der Großkraftwerke werden individuell konstruiert und angefertigt, bevor sie auf der Baustelle des Kraftwerkes endgültig zusammengebaut werden. Die Laufräder solcher Turbinen besitzen einen Durchmesser von bis zu 11 m. Wasserturbinen lassen sich allerdings nicht beliebig miniaturisieren, da Kleinturbinen einen ähnlichen Aufwand zur Regelung haben wie Großturbinen und besonders empfindlich auf Wasserverschmutzungen reagieren.

Eine Besonderheit der Wasserturbine ist die aufwendige Regelung ihrer Drehzahl bei dem immer leicht schwankenden Durchfluss des Wassers. Die ausgeführten Regler halten mit hydraulisch betätigten Stellorganen (Armaturen und Leitschaufeln) die Drehzahl konstant und sichern die Turbine außerdem gegen Durchgehen", falls das Widerstandsdrehmoment an der Generatorwelle beispielsweise wegen eines Leerlaufes abfallen sollte.

Auf eine Drehzahlregelung kann bei kleinen Turbinen im Netzbetrieb verzichtet werden, da der Generator bei Netzeinspeisung aufgrund der Netzfrequenz auf konstanter Drehzahl gehalten wird. Bei Netzausfall muss dann aber mittels Klappen oder Schützen die Wasserzufuhr unterbrochen werden, um das Durchgehen zu verhindern, wenn die Turbine und der Generator nicht für die Leerlaufdrehzahl ausgelegt wurden.

Der Anteil von Turbine und Regler an den gesamten Investitionen eines Wasserkraftwerkes ist erheblich. Dieser Kostenanteil beträgt bei Kleinanlagen bis zu 50 %, bei Großanlagen 10 bis 20 %.

Bei einer Francis-Spiralturbine wird Wasser zumeist durch ein schnecken- bzw. spiralförmiges Rohr, in zusätzlichen Drall versetzt (Spiralturbine) und anschließend durch ein feststehendes "Leitrad" mit verstellbaren Schaufeln auf die gegenläufig gekrümmten Schaufeln des Laufrads gelenkt. Ist der Einlaufbereich zum Leitrad nicht spiralförmig ausgebildet, spricht man von einer Francis-Schachtturbine.

Durch ein als Diffusor wirkendes Saugrohr an der Verlängerung der Turbinenachse wird das Wasser nach dem einmaligen Durchströmen des Laufrades abgeleitet. Mit Hilfe der Leitschaufeln wird die Drehzahl und damit die Leistung der Turbine bei Lastwechseln des angeschlossenen Generators und bei wechselnden Wasserständen konstant gehalten. Die Francis-Turbine ist eine Überdruckturbine, am Laufradeintritt ist der Druck höher als am Laufradaustritt.

Der zur Turbine gehörende Regler erfasst die Drehzahl der Turbine auf der Welle als Regelgröße und wandelt das Ergebnis auf servohydraulischem Wege in eine Stellgröße, die die Leitschaufeln entsprechend der Drehzahlabweichung öffnet oder schließt.

Die Kaplan-Turbine ist eine axial angeströmte Wasserturbine mit verstellbarem Laufrad und wird in ebenso Wasserkraftwerken verwendet.

Das Laufrad gleicht bei der Kaplan-Turbine einem Schiffspropeller, dessen Flügel verstellbar sind. Die Drehzahl einer klassischen Kaplanturbine ist unabhängig von der Wassermenge konstant. Daher kann der Generator einer Kaplanturbine mit entsprechender Übersetzung direkt in das Netz einspeisen. Durch die Flügelverstellung des Propellers wird erreicht, dass die Flügel bei schwankenden Wassermengen immer optimal umströmt werden und dadurch einen hohen Wirkungsgrad erzielen. Turbinen ohne diese Flügelverstellung werden als Propellerturbinen bezeichnet. Um bei schwankenden Wassermengen ebenfalls einen hohen Wirkungsgrad zu erreichen, wird daher bei Propellerturbinen die Drehzahl angepasst (elektrotechnische Regelung). Strömungsmechanisch wird dadurch der gleiche Effekt erzielt wie bei der Verstellung der Laufradflügel einer klassischen Kaplanturbine. Bei konstanten Wassermengen kann auf die Anpassung der Drehzahl bzw. das Verstellen der Laufradflügel verzichtet und direkt ins Netz eingespeist werden.

Vor dem Laufrad befindet sich das Leitwerk, auch als Leitschaufeln bezeichnet. Es sorgt dafür, dass das Wasser optimal auf die Schaufeln der Turbine trifft und die Turbine in Rotation versetzt. Durch das Einstellen von Leit- und Laufradschaufeln (doppelte Regulierung) kann der Wirkungsgrad der Kaplan-Turbine jeweils an unterschiedliche Wassermengen und Fallhöhen angepasst werden.

Doppelt regulierte Turbinen sind bestens geeignet für den Einsatz bei niedrigen bis niedrigsten Fallhöhen und großen sowie schwankenden Durchflussmengen. Die Kaplan-Turbine ist damit prädestiniert für große Flusskraftwerke an ruhig fließenden Großgewässern, sowie auch für Bewässerungskanäle, Restwasserkraftwerke und den Einsatz in Mühlen.

Der Wasserdruck nimmt vom Eintritt in das Laufrad bis zum Austritt stetig ab - in der Kaplanturbine wird potentielle Energie in kinetische Energie umgewandelt. Die Restenergie wird im Saugrohr abgebaut, das der Turbine nachgeschaltet ist. Durch das Saugrohr verlässt das Wasser die Turbine ins Unterwasser.

Demgemäß sind sowohl bei der Francis-Turbine als auch bei der Kaplan-Turbine verstellbare Leitschaufeln vorgesehen, wobei eine Drehbewegung des Laufrades über eine zentrale Welle, bspw. auf einen Generator, übertragen bzw. abgenommen wird.

Von der Aquakin Gmbh ist unter dem Namen "Blue Freedom Vortex" ein Wirbel-Wasserkraftwerk erhältlich. Dieses Wirbel-Wasserkraftwerk umfasst eine Zuführspirale, um Wasser einer Turbine zuzuführen, wobei diese Turbine über eine zentrale Welle mit einem Generator verbunden ist. Dabei soll die hohe Energiedichte im Kern eines Wirbels nutzbar gemacht werden.

In der WO 2016/116248 A1 ist eine Vorrichtung zur Erzeugung elektrischer Leistung aus einem Fluidstrom offenbart. Die Vorrichtung umfasst eine Generatoreinheit, eine flexible Welle, die an einem ersten Ende drehbar an der Generatoreinheit befestigt ist, und einem zweiten Ende, das an einer Turbine befestigt ist. Die Turbine umfasst eine Vielzahl von Schaufeln und eine Felge, die an der Vielzahl von Schaufeln befestigt ist.

Aus der WO 2010/063385 geht ein Unterwasserkraftanlage hervor. Diese umfasst ein Wasserturbine, eine Stützstruktur und eine Gondel, wobei die Stützstruktur und die Gondel mittels einer Kupplungsvorrichtung lösbar miteinander verbunden sind. Die Wasserturbine, treibt indirekt einen in der Gondel befindlichen elektrischen Generator an. Weiterhin ist eine induktive Übergabeeinrichtung vorgesehen, die die vom elektrischen Generator erzeugte Leistung von der Gondel auf die Stützstruktur kontaktlos überträgt.

In der WO 2016/059118 A1 ist eine weitere alternative Wasserkraftwerksvorrichtung offenbart.

In der DE 10 2017 104 848 B3 ist ein Wasserkraftwerk offenbart. Das Wasserkraftwerk umfasst an einem oberen Ende eine Zuführleitung, um Wasser tangential in einen Trichter einzubringen. An einer inneren Mantelwandung des Trichters 50 sind Widerstandstrukturen angeordnet. Der Trichter ist mit einer Hohlwelle verbunden. Über das auf die Widerstandschaufeln auftreffende Wasser wird die Hohlwelle angetrieben. In der Hohlwelle sind im Bereich des Trichters Durchgangsöffnungen zum Durchleiten des zugeführten Wassers aus dem Trichter in die Hohlwelle vorgesehen. Unterhalb des Trichters ist an der Hohlwelle eine Hohlwellenturbine zum Antreiben der Hohlwelle vorgesehen. Weiterhin ist zentral in der Hohlwelle eine Zentralwelle 30 angeordnet, die eine Zentralwellenturbine zum Antreiben der Zentralwelle aufweist. Sowohl die Hohlwellenturbine als auch die Zentralwellenturbine sind mit einer Umwandlungseinrichtung verbunden, um die mechanische Energie in elektrische Energie umzuwandeln.

Aus der DE 869 027 B geht eine Wasserturbine hervor. Diese Wasserturbine um-fasst einen inneren feststehenden hohlzylindrischen Teil, der aus einem Statoroberteil und einem Statorunterteil ausgebildet ist. Hierbei ist vorgesehen den Wasserdruck über die zwei hintereinander angeordneten Statorteile abzugeben. Auf diese Weise soll der Wasserweg in einem rotierenden Turbinenelement verlängert werden. In einer Hochdruckstufe wird der Wasserstrahl nicht nur um 180 Grad gewendet, sondern macht hier einen ganzen Umlauf, wobei er den größten Teil seiner Energie durch Reibung auf eine Läuferwand überträgt. Die Druckabgabe erfolgt dabei über Hochdruckschaufel, einen Strömungskanal und Niederdruckschaufeln. Auf diese Weise soll die Druckabgabe des Wassers langsamer, stetiger und vollständiger erfolgen. Der Statoroberteil bildet im Querschnitt einen flachen Hohlzylinder mit einer vertikalen Seitenwandung aus in der eine Strahldüse angebracht ist. In der Mitte befindet sich eine konzentrischere Verstärkung, die bis auf den Statorunterteil herabreicht und gemeinsam mit diesen eine Basis für das darüberstehende Laufrad mit Welle bildet. Aus dem Inneren des Statorunterteils führt ein schneckenförmiger Gang durch eine Außenwand der Strahldüse ins Freie. In dieser Ausmündung ist die Strahldüse angeordnet.

In der CH 700 295 A2 ist ein Wasserkraftwerk offenbart. Dieses Wasserkraftwerk umfasst ein kreisförmiges Wasserbecken mit einer radialen Mantelwandung und einem Beckenboden. Weiterhin ist eine Zulauföffnung vorgesehen. Mittig im Beckenboden ist eine Auslassöffnung ausgebildet und an der Mantelwandung des Wasserbeckens sind sich radial nach innen erstreckende Widerstandsschaufeln angeordnet. Über einen Zulauf sollen die Widerstandsschaufeln mit Wasser beaufschlagt werden, sodass die Vorrichtung in eine Drehbewegung versetzt wird. Über die Auslassöffnung wird das Wasser dann entsprechend abgeführt.

Aus der US 2012/0 313 375 A1 geht eine mittels Zentripetalkraft betriebene Wasserturbine hervor. Hierbei ist vorgesehen, über einen Zulauf Wasser in eine Turbineneinheit einzubringen. Die Turbineneinheit umfasst einen rohrförmigen Abschnitt und einen sich daran anschließenden trichterförmigen Abschnitt. Zwischen einer inneren Mantelwandung und einer äußeren Mantelwandung der Turbineneinheit sind Widerstandsschaufeln angeordnet. Die Turbineneinheit ist mit einer drehbar gelagerten Welle fest verbunden, über die die Energie abgenommen werden kann. Somit dreht sich die ganze Vorrichtung und muss auf einem entsprechenden Untergrund fest fixiert werden, sodass die Drehenergie der Welle beziehungsweise die Rotationsenergie der Welle entweder als mechanische Energie über ein entsprechendes Getriebe oder aber auch einen Generator abgenommen werden kann.

In der US 5 263 814 A ist eine Wasserturbine offenbart. Diese Wasserturbine um-fasst einen ersten drehbaren Zylinder mit einem Wassereinlass und mehreren radial umlaufend angeordneten Abgabedüsen. Dieser wird von einem zweiten drehbar gelagerten Zylinder umgeben, an dessen inneren Mantelwandung Widerstandsschaufeln angeordnet sind. Der zweite drehbare Zylinder weist einen trichterförmigen Abschnitt auf, über den das ihn durchströmende Wasser zusammengeführt und über einen entsprechenden Auslass abgegeben wird. Hierbei kann auch vorgesehen sein, dass die Widerstandsschaufeln auch im trichterförmigen Abschnitt des zweiten drehbaren Zylinders angeordnet sind. Gemäß dieser Vorrichtung ist vorgesehen, strömendes Wasser beziehungsweise kinetische und/oder potentielle Energie aufweisendes Wasser über den Wassereinlass in den ersten drehbaren Zylinder einzubringen und über die in der äußeren Mantelwandung des ersten Zylinders angeordneten Düsen abzugeben und diesen in eine Drehbewegung zu versetzen. Die Düsen leiten das Wasser auf die Widerstandsschaufeln des zweiten drehbaren Zylinders, sodass dieser ebenfalls in eine Drehbewegung versetzt wird. Die dabei entstehende Energie kann über entsprechende Riemen abgenommen werden.

In der US 4 382 746 ist eine Wellenturbinenvorrichtung offenbart. Diese umfasst einen im Wesentlichen vertikalen Behälter zur Aufnahme einer Flüssigkeit, wobei der Behälter sich in Richtung einer Bodenwandung verjüngend ausgebildet ist und in der Bodenwandung eine entsprechende Öffnung aufweist, wobei der Behälter einen wirbelinduzierenden Abschnitt und ein auf den Wirbel reagierendes Mittel zum Aufbringen einer Drehkraft auf dem Behälter umfasst. Zudem ist eine Einrichtung zur eine Einrichtung vorgesehen, die mit dem Behälter gekoppelt ist und über die die vom Behälter erzeugte Drehbewegung in Form von elektrischer Energie abgenommen werden kann.

Aufgabe der vorliegenden Erfindung ist es, eine stationäre oder mobile Strömungsmaschine zum Bereitstellen von elektrischer Energie vorzusehen, die eine Alternative zu bekannten Strömungsmaschinen darstellt und eine hohe Effizienz aufweist.

Diese Aufgabe wird durch die Merkmale des unabhängigen Patentanspruchs 1 gelöst. Vorteilhafte Ausgestaltungen davon sind in den Unteransprüchen angegeben.

Erfindungsgemäß ist eine Strömungsmaschine zum Bereitstellen von elektrischer Energie vorgesehen. Diese umfasst eine Gehäuseeinrichtung, eine in der Gehäuseeinrichtung um eine Rotationsachse drehbar gelagerte Turbineneinrichtung. Die Turbineneinrichtung umfasst einen in etwa trichterförmigen Laufradkörper mit einem Einlassbereich, einem Auslassbereich und einer geschlossenen radialen Mantelwandung, die einen Turbinenraum begrenzt. Im Turbinenraum sind an einer Innenwandung des Laufradkörpers radial umlaufend Laufrad- bzw. Widerstandsschaufeln angeordnet, wobei die Laufradschaufeln über Abstandshalter mit der Innenwandung des Laufradkörpers derart verbunden sind, dass zwischen der Innenwandung des Laufradkörpers und den Laufradschaufeln ein Spalt ausgebildet wird und ein Wasserstrudel an der Innenwandung des Laufradkörpers ausbildbar ist. Weiterhin ist eine Stromerzeugungseinrichtung vorgesehen, die mit dem Laufradkörper gekoppelt ist, wobei sich die Widerstandsschaufeln, von dem entgegen der Durchströmrichtung liegenden Ende des trichterförmigen Laufradkörpers bis in etwa 50 % bzw. 60 % bzw. 70 % bzw. 75 % bzw. 80 % bzw. 90 % oder auch der gesamten Höhe in vertikaler Richtung hin zum in Durchströmrichtung liegenden Enden des trichterförmigen Laufradkörpers erstrecken.

Bei so genannten Francis- oder Kaplan-Turbinen ist meist ein in etwa ringförmiges Leitrad vorgesehen, um eine entsprechende Turbine in axialer oder radialer Richtung anzuströmen. Die Laufräder der Turbine sind dabei über eine Welle entweder unmittelbar oder über einen entsprechenden Riemenantrieb mit einem Generator verbunden.

Bei den aus dem Stand der Technik bekannten Vorrichtungen wird die Bildung eines Strudels in einer Turbine zumeist dadurch verhindert, dass Laufradschaufeln direkt am Laufradkörper angeordnet sind. Auch ist die Art der Einbringung von Wasser in die Turbine nicht geeignet um einen Strudel auszubilden. Vielmehr ist bei solchen Vorrichtungen vorgesehen, dass die Turbine vom Wasser durchspült wird und keinen ganzen Umlauf im Turbinenkörper und insbesondere keinen mehrmaligen Umläufe in der Turbine ausführt, d.h. die Laufradschaufeln werden lediglich 1 mal mit einem entsprechenden Wasserstrom beaufschlagt bevor dieser die Turbine wieder verlässt.

Bei der vorliegenden Erfindung ist hingegen eine drehbar gelagerte Turbineneinrichtung vorgesehen, wobei die Turbineneinrichtung einen in etwa trichterförmigen Laufradkörper mit einer, zumindest in radialer Richtung, geschlossenen Mantelwandung umfasst. Diese Mantelwandung begrenzt einen Turbinenraum. Im Turbinenraum sind an einer Innenwandung des Laufradkörpers radial umlaufend Widerstandsschaufeln angeordnet. Eine Stromerzeugungseinrichtung ist mit dem trichterförmigen Laufradkörper gekoppelt.

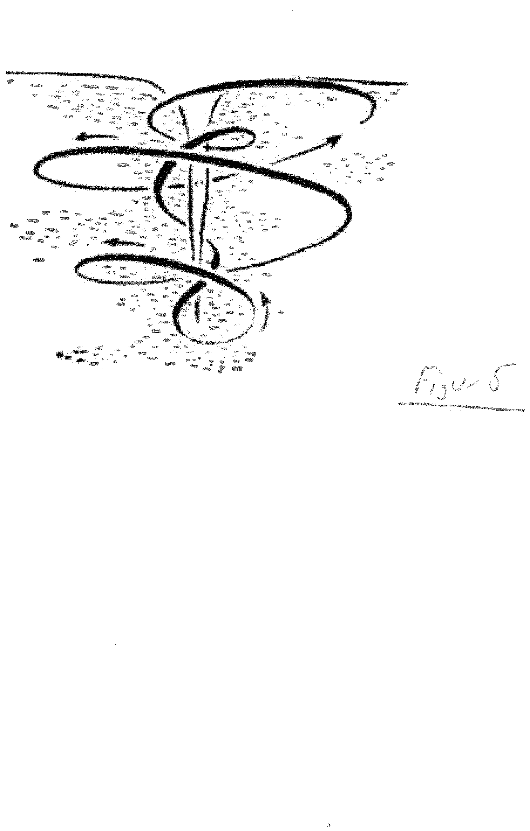

Erfindungsgemäß wird nun die Turbineneinrichtung bzw. der trichterförmige Laufradkörper in einer Durchströmrichtung von dem Einlassbereich in Richtung des Auslassbereichs durchströmt. Auf diese Weise wird der trichterförmige Laufradkörper beschleunigt. Hierbei steigt das Wasser aufgrund der Fliehkraft sowie die Strömungseigenschaften des erzeugten Wasserstrudels (Figur 5) entgegen der abfließenden Durchströmrichtung im trichterförmigen Laufradkörper und versetzt diesen in Drehbewegung. Dieser Strudel hält sich in einem entgegen der Durchströmrichtung liegenden Bereich des Laufradkörpers. Das bedeutet das Wasser verbleibt im Gegensatz zu herkömmlichen Turbinen eine Zeit lang in diesem Strudelbereich bzw. Strudelabschnitt des trichterförmigen Laufradkörpers. Auf diese Weise steht der erfindungsgemäßen Vorrichtung eine große Menge an Rotationsenergie zur Verfügung.

Dadurch, dass die die Laufradschaufeln über Abstandshalter mit der Innenwandung des Laufradkörpers derart verbunden sind, kann sich ein Wasserstrudel an der Innenwandung des Laufradkörpers ausbilden und wird nicht durch direkte an der Innenwandung des Laufradkörpers befestigte Laufradschaufeln abgelenkt bzw. behindert.

Bei der erfindungsgemäßen Strömungsmaschinesteigt eine Teil des Wassers im trichterförmigen Laufradkörper in vertikaler Richtung nach oben und strömt an der Innenwandung einige Umläufe bevor es über die Auslassöffnung abgegeben wird. Das im Laufradkörper ansteigende Wasser wirkt in Verbindung mit der darauf wirkenden Zentrifugalkraft wie eine Schwungmasse wodurch der Wasserstrudel eine gewisse Zeit lang erhalten bleibt.

Der trichterförmige Laufradkörper in Verbindung mit den Widerstandschaufeln und den Abstandshaltern gewährleistet die Bildung und Aufrechterhaltung des Wasserstrudels.

Die Widerstandsschaufeln werden daher mehrmals vom "gleichen" Wasser des Wasserstrudels beaufschlagt und angeströmt. Auf diese Weise wird die Effizienz erhöht, da die kinetische Energie des Wasserstrudels mehrmals bzw. in mehreren Umläufen im Laufradkörper genutzt wird bzw. verfügbar ist.

Die Widerstandschaufeln sind über die Abstandshalter derart zur Innenwandung des Laufradkörpers angeordnet, dass zwischen Widerstandschaufel und Innenwandung des Laufradkörpers der Spalt ausgebildet wird. Dieser Spalt kann eine Art Venturi Düse ausbilden bzw. kann es zu einem Venturi-Effekt zwischen der entsprechende Kante der Laufradschaufeln und der Innenwandung des Laufradkörpers im Bereich des Spaltes kommen.

Das Wasser fließt durch den Spalt zwischen Laufradschaufel und der Innenwandung des Laufradkörpers. Dieser Spalt bildet eine schlitzförmige Engstelle nach Art einer Venturi-Düse aus an der der dynamische Druck (Staudruck) maximal und der statische Druck minimal ist. Die Geschwindigkeit des strömenden Wasser steigt im Verhältnis der Querschnitte beim Durchströmen des eingeschnürten Spaltes an, weil überall dieselbe Menge durchfließt.

Die Laufradschaufeln und/oder die Abstandshalter können als hydrodynamisches Profil ausgebildet sein. Die in etwa plattenförmigen Abstandshalter können sich in einer horizontalen Ebene quer zur Rotationsachse erstrecken.

Auf diese Weise bilden sie nur einen sehr geringen Widerstand für den Wasserstrudel aus, behindern ihn nur geringfügig beim Umlaufen und lenken ihn auch nur geringfügig ab.

Die Umwandlung von Wasserkraft in elektrische Energie ist mittels der erfindungsgemäßen Vorrichtung in nahezu allen Gewässern, auch mit geringer Tiefe und niedriger Strömungsgeschwindigkeit möglich. Die erfindungsgemäße Strömungsmaschine ist beispielsweise zum stationären oder mobilen Einsatz in natürlichen Wasserläufen geeignet. Eine weitere Anwendung kann auch bei industriellen Fluidführungen für flüssige Prozessmedien vorgesehen sein.

Dabei wird der, im Inneren des trichterförmigen Laufradkörpers, entstehende Strudel energetisch optimal genutzt.

Insbesondere bilden sich an der Innenwandung des Turbinenraumes im Bereich des Strudels mehrere übereinanderliegende energiereiche Schichten.

Durch den mehrmaligen Umlauf der Schichten wirkt der trichterförmige Laufradkörper, im Bereich seines größten Durchmesser, in dem auch die Rotationsbewegung des Laufradkörpers abgenommen wird, wie ein Schwungrad, wobei durch die übereinanderliegenden Schichten eine relativ große Schwungmasse aufgebaut wird, was beim Generatorwiderstands eine stabile Rotation des trichterförmigen Laufradkörpers gewährleistet. Das im trichterförmigen Laufradkörper vorhandene Wasser bzw. dessen energiereiche Schichten geben zunächst ihre Energie an die Laufradschaufeln ab und bewegen sich dann in einer Art Schwall entgegen der Durchströmrichtung der Turbineneinrichtung und anschließend in Richtung der Rotationsachse, wobei diese dann in Richtung des Auslassbereiches der Turbineneinrichtung strömen. Das auf diese Weise ablaufende Wasser beschleunigt dann aufgrund der vorhandenen potenziellen Energie zwischen dem entgegen der Durchströmungsrichtung liegenden Einlassbereich der Turbineneinrichtung und dem Auslassbereich.

Die erfindungsgemäße Strömungsmaschine benötigt daher keine große potenzielle Energie bezüglich des bereitgestellten Wassers, welches die Turbine durchströmt, sondern nutzt die rotierende Strömung des erzeugten Wasserstrudels. Erfindungsgemäß wird die kinetische Energie des Wassers zunächst in mechanische Energie und anschließend in elektrische Energie umgewandelt.

Der Erfinder der vorliegenden Erfindung hat erkannt, dass durch die Ausbildung einer drehbar gelagerten Turbineneinrichtung mit einem in etwa trichterförmigen Laufradkörper mit einer geschlossenen radialen Mantelwandung die Bildung eines stabilen Strudels ermöglicht wird. Dieser Strudel ist vergleichbar mit dem eines Wirbelsturms.

Vorzugsweise kann die Gehäuseeinrichtung bis auf den Auslassbereich und den Einlassbereich geschlossen ausgebildet sein auf diese Weise wird ein Sog erzeugt und die Strudelbildung begünstigt.

Der trichterförmige Laufradkörper wird durch die Spiralbewegung des strudelförmigen erzeugten Wasserstroms über die Widerstands- bzw. Laufradschaufeln angetrieben.

Unter einer Trichterform wird im Rahmen der vorliegenden Erfindung eine konische bzw. kegelförmige und vorzugsweise eine in etwa herzförmige Form der Turbineneinrichtung in einer seitlich geschnittenen Ansicht verstanden.

Insbesondere kann die Strömungsmaschine eine Flüssigkeitszuführeinrichtung aufweisen. Diese Flüssigkeitszuführeinrichtung umfasst einen Einlass und einen Auslass, wobei eine Mittelachse des Auslasses in den Einlassbereich des Laufradkörpers in etwa tangential in dem Bereich des größten Durchmessers der Innenwandung des trichterförmigen Laufradkörpers mündet.

Dadurch, dass der Auslass der Flüssigkeitszuführeinrichtung bzw. dessen Mittelachse in den Einlassbereich des Laufradkörpers in etwa tangential in dem Bereich des größten Durchmessers der Innenwandung des Laufradkörpers mündet, kann die mittels der Flüssigkeitszuführeinrichtung zugeführte Flüssigkeit in einem optimalen Winkel auf die Widerstandsschaufeln des trichterförmigen Laufradkörpers treffen und bildet den dort gewünschten energiereichen mehrschichtigen Strudel aus.

Vorzugsweise kann in der Flüssigkeitszuführeinrichtung ein Drallerzeuger angeordnet sein. Dieser umfasst eine oder mehrere rinnenförmig ausgebildete und spiralförmig an einer Innenwandung der Flüssigkeitszuführeinrichtung angeordnete Leitprofile. Die Leitprofile des Drallerzeugers sind derart ausgebildet, dass das die Flüssigkeitszuführeinrichtung durchströmende Wasser mit Drall beaufschlagt wird und dabei beschleunigt wird. Weiterhin kommt es auf Grund des Drallerzeugers zu geringeren Reibungsverlusten zwischen dem die Zuführeinrichtung durchströmenden Wasser und einer inneren Mantelwandung der Flüssigkeitszuführeinrichtung.

Weiterhin kann die Flüssigkeitszuführeinrichtung einen geraden Zuführtrichter aufweisen, so dass die Strömungsgeschwindigkeit des Wassers beim Eintreten in die Flüssigkeitszuführeinrichtung durch die Querschnittsverengung des Zuführtrichters erhöht wird. Der Drallerzeuger kann vorzugsweise lediglich im Zuführtrichter bzw. im Bereich eines Einlasses der Flüssigkeitszuführeinrichtung oder auch in der gesamten Flüssigkeitszuführeinrichtung angeordnet sein.

Weiterhin kann die Flüssigkeitszuführeinrichtung spiral- bzw. schneckenförmig ausgebildet sein. Vorzugsweise folgt die Spiral- bzw. Schneckenform der Flüssigkeitszuführeinrichtung einer Fibonacci-Spirale.

Mittels einer derart ausgebildeten Flüssigkeitszuführung wird das in die Turbineneinrichtung strömende Wasser schon beim Zuführen in eine spiralförmige Bewegung bzw. einen Strudel versetzt bzw. mit einem Drall beaufschlagt.

Besonders bevorzugt kann vorgesehen sein, dass ein Einlassquerschnitt der Flüssigkeitszuführeinrichtung größer als ein Auslassquerschnitt der Flüssigkeitszuführeinrichtung ausgebildet ist.

Auf diese Weise wird die zugeführte Flüssigkeit durch die entsprechende Querschnittsverengung beschleunigt und weist somit mehr kinetische Energie beim Auftreffen auf die Widerstandsschaufeln des trichterförmigen Laufradkörpers auf.

Auf diese Weise erfährt die zugeführte Flüssigkeit eine gleichmäßige Beschleunigung.

Weiterhin kann vorgesehen sein, dass der, entgegen einer Durchströmrichtung der Turbineneinrichtung liegende, Einlass gegenüber dem in der Turbineneinrichtung angeordneten Auslass einen Höhenversatz aufweist. Auf diese Weise wird die die Flüssigkeitszuführeinrichtung durchströmende Flüssigkeit aufgrund der potenziellen Energie durch den Höhenversatz zusätzlich beschleunigt.

Weiterhin können in der Flüssigkeitszuführeinrichtung Deflektoren vorgesehen sein, um sich im Wasser ausbildende Cluster aufzulösen und die Flüssigkeit innerhalb der Flüssigkeitszuführeinrichtung in eine Wirbelbewegung zu versetzen. Wenn Wasser unter Druck steht bilden sich unter dem Einfluss der intermolekularen Wasserstoffbrückenkräfte Cluster, ähnlich der Verbindung von Eiskristallen, und beeinflussen das Fließverhalten des Wassers.

Bei freifließendem und verwirbeltem Wasser in der Natur sind die Wassermolekülen dieser Clusterbildung nicht ausgesetzt und haben eine bessere Fließeigenschaft.

Die Stromerzeugungseinrichtung kann eine Generatoreinrichtung sein, die einen Rotor und einen Stator umfasst, wobei der Rotor im Bereich des geringsten Durchmessers im Auslassbereich am äußeren Umfang der Mantelwandung des Laufradkörpers angeordnet sein kann und der Stator, entsprechend an der Gehäuseeinrichtung vorgesehen ist, wobei die Generatoreinrichtung als Axial- bzw. Transversalflussmaschine und somit als ein Axialflussgenerator ausgebildet ist.

Die Generatoreinrichtung kann an sich an einer beliebigen Stelle mit dem Laufradkörper gekoppelt sein. Jedoch ist es vorteilhaft wen die Generatoreinrichtung in etwa bündig mit dem Gehäuse der Strömungsmaschine abschließt, so dass eine kompakte Vorrichtung ausbildbar ist. Jedoch ist ein relativ Großer Durchmesser wie es durch eine Anordnung der Generatoreinrichtung im Auslassbereich möglich ist bevorzugt, da damit eine größere Umfangsgeschwindigkeit erzielbar ist, wodurch sich eine höhere Spannung erzeugen lässt.

Die Axial- bzw. Transversalflussmaschine (AFM; TFM) ist eine elektrische Maschine, die im Gegensatz zu den normalen Maschinen mit Durchmesserwicklung eine Umfangswicklung hat, die konzentrisch zur Welle der Maschine angeordnet ist. Der magnetische Fluss verläuft transversal (senkrecht) zur Drehebene.

Transversalflussmaschinen sind meist als permanenterregte Synchronmaschinen ausgeführt, in einphasiger oder mehrphasiger Bauweise. Bei der erfindungsgemäßen Strömungsmaschine eist eine drei-phasige Ausführung bevorzugt.

Bei diesem Maschinentyp ist der magnetische Fluss der Permanentmagnete in Richtung der Rotationsachse ausgerichtet.

Die Vorteile gegenüber Radialflussmaschinen sind:
- Entkopplung des magnetischen und elektrischen Kreises, unabhängige Dimensionierung
- Wegfall der Wickelköpfe, die nicht zur Momenterzeugung beitragen. Dadurch wird eine viel feinere Polteilung möglich: kleine Drehzahl mit großem Moment, Wegfall von Getrieben.
- einfache Wicklungen (nutlose Ausführung)
- kleines Nutrastmoment und wenig Geräusche (nutlose Ausführung)
- gering axiale Länge
- hohes Drehmoment/Volumen Verhältnis.

Die Stromerzeugungseinrichtung kann eine Generatoreinrichtung sein, die einen Rotor und einen Stator umfasst, wobei der Rotor im Bereich des größten Durchmessers am äußeren Umfang der Mantelwandung des Laufradkörpers angeordnet ist und der Stator, entsprechend an der Gehäuseeinrichtung vorgesehen ist. Es kann auch vorgesehen sein, dass eine Generatorwelle der Generatoreinrichtung mit dem Laufradkörper gekoppelt ist und von diesem angetrieben wird.

Die Stromerzeugungseinrichtung kann auch Magnete und Induktionsspulen umfassen, wobei die Magnete im Bereich des größten Durchmessers am äußeren Umfang der Mantelwandung des Laufradkörpers angeordnet sind und die Induktionsspulen, entsprechend an der Gehäuseeinrichtung vorgesehen sind.

Die Stromerzeugungseinrichtung kann auch mittels Piezoaktivierung erfolgen, wobei im Bereich des größten Durchmessers am äußeren Umfang der Mantelwandung des Laufradkörpers Aktuatoren angeordnet sind und entsprechend an der Gehäuseeinrichtung Piezoelemente vorgesehen sind.

Dadurch, dass bspw. der Rotor der Generatoreinrichtung im Bereich des größten Durchmessers am äußeren Umfang der Mantelwandung des Laufradkörpers angeordnet ist, bildet der Rotor der Generatoreinrichtung eine Art Schwungrad aus. Die Schwungmasse beschleunigt zum einen die Drehbewegung der Turbineneinrichtung um die Rotationsachse und gibt zudem Stabilität, wenn elektrische Leistung abgenommen wird. Mittels der Rotationsbewegung können der Stator über den Rotor bzw. die Induktionsspulen über die Magnete oder die Piezoelemente über die Aktuatoren angeregt werden.

Ein entgegen der Durchströmrichtung liegender Bereich des trichterförmigen Laufradkörpers kann mittels einer in der Draufsicht kreisringförmigen und im Querschnitt wannenartigen Schwallwandung begrenzt sein. Diese bildet eine entgegen der Durchströmrichtung liegende räumliche Begrenzung des Turbinenraumes aus.

Auf diese Weise wird die Flüssigkeit, die zunächst tangential in den trichterförmigen Laufradkörper eingebracht wird und dann aufgrund der Fliehkraft aufsteigt, umgeleitet und auf diese Weise die darin enthaltene Energie zusätzlich nutzbar gemacht.

Zudem begünstigt die Schwallwandung auch den Ablauf der energiearmen Schichten der Flüssigkeit.

Weiterhin hat der Erfinder der vorliegenden Erfindung herausgefunden, dass durch eine derartige Schwallwandung beim Ablaufen eine Art Windhose im Raum des Strudels entsteht, wodurch ein Unterdruck erzeugt wird. Diese Windhose bzw. diese Luftsäule erzeugt eine Art Vakuum im Turbinenraum, das ablaufende Wasser beim Abströmen durch den Luftwirbel von unten angesaugt wird. Durch die somit geschlossene Mantelwandung wird der Unterdruck beim Durchströmen der Turbine erzeugt, wobei der Unterdruck die Stabilität und Rotation des Strudels fördert.

Dadurch, dass erfindungsgemäß ein Unterdruck beim Abfließen der Flüssigkeit bzw. eine entsprechende in etwa trichter- bzw. tornadoförmige Luftsäule beim Abfließen im trichterförmigen Laufradkörper entsteht, wird eine viel stärkere Wirbelbewegung erzeugt.
Die vorstehend genannten Eigenschaften basieren auf den Folgenden Erkenntnissen, dass jedes scheinbar noch so einheitlich strömende Wasser in große innere Oberflächen aufgegliedert ist. Wenn sich nun hinter einem Stein oder Brückenpfeiler Wirbel bilden, werden diese Oberflächenschichten in den Wirbel eingebunden, in dem sie nun in Kreis- bzw. Spiralbahnen aneinader vorbeiziehen. Dieser Vorgang ist kaum zu beobachten, weil das Wasser durchsichtig ist, er kann aber durch Farbe sichtbar gemacht werden. Dann wird deutlich, wie der Wirbel im Inneren schneller dreht als weiter Außen und wie die Schichten drehend aneinander vorbeigleiten (Figur 5). Es ist ein Gebilde entstanden, das sich inmitten des allgemeinen strömenden Wassers heraus sondert. Ein in der Wassermasse eingeschlossener Bereich, der aber doch mit dem Ganzen in Verbindung steht.

Der ausgesonderte Wirbel zeigt bei näherer Betrachtung einem ihm eigenen Rhythmus. Einmal streckt sich der Wirbel und greift, sich zusammenzieht, mit seinem untersten Partien nach unten, danach zieht er die inneren Teile wieder eine erneute Zusammenziehung, verbunden mit einer Streckung in die Tiefe, die dann wieder in die Breite zurückgenommen wird usw. Es entsteht also eine rhythmische Pulsation.

Im Werk "Technische Strömungslehre charakterisiert B. Eck (Berlin 1941)die Vorgänge im saugenden Zentrum des Wirbels" ist dies wie Folgt beschrieben: "Für r=0 wird p=-∞, sprich für den Radius 0, also im Wirbelzentrum selbst, wird der Druck gleich minus unendlich."

Dadurch, dass der Wasserstrudel am Auslauf nicht den gesamten Querschnitt ausfüllt, wird die Luft in den Trichter in spiralförmiger Bewegung hinein gesaugt.

Hier ist zu sehen, dass das Wasser aus der Strudelumgebung wieder steigt, um dann wieder in den Strudel zu gelangen.

Generell erzeugt der Strudel eine Verdichtung der Wasserschichten, wobei das Wirbelauge des Strudels nicht mit Wasser gefüllt ist. Demgemäß wird der Austrittsquerschnitt im Auslassbereich des trichterförmigen Laufradkörpers nicht vollständig ausgenutzt, so dass Luft einströmen kann, und den vorstehend genannten Luftwirbel ausbilden kann.

Die Flüssigkeitsschichten unterschiedlicher Energiedichte halten die Beschleunigung des Laufradkörpers hoch.

Entgegen dem in Durchströmrichtung liegenden Ende und am in Durchströmrichtung liegenden Ende ist der trichterförmige Laufradkörper mit der Gehäuseeinrichtung über entsprechende, in der Schwallwandung und im Auslassbereich des trichterförmigen Laufradkörpers angeordnete rohrförmige Lagerabschnitte, in denen entsprechende Lagereinrichtungen angeordnet sind, drehbar in der Gehäuseeinrichtung gelagert.

Durch diese zentrale Lagerung im Bereich der Rotationsachse und den Einlass wird eine stabile Rotation bzw. Drehbewegung gewährleistet. Zudem sind die Lagereinrichtungen geringeren Kräften ausgesetzt.

Zur Unterstützung und/oder Stabilisierung der Drehbewegung können in einem Deckel der Gehäuseeinrichtung entsprechende Führungsrolleneinrichtungen vorgesehen sein.

Am trichterförmigen Laufradkörper sind die Widerstandsschaufeln von dem entgegen der Durchströmrichtung liegenden Ende des trichterförmigen Laufradkörpers (Einlassbereich) bis in etwa 50% bzw. 60% bzw. 70% bzw. 75% bzw. 80% bzw. 90% oder auch der gesamten Höhe in vertikaler Richtung der Höhe hin zum in Durchströmrichtung liegenden Ende des trichterförmigen Laufradkörpers (Auslassbereich) vorgesehen.

Die Ausbildung der trichterförmigen Luftsäule und des damit verbundenen Unterdrucks durch das geschlossene System der Strömungsmaschine verstärkt die Ausprägung des Wasserstrudels und somit die kinetische Energie im trichterförmigen Laufradkörper erheblich.

Weiterhin ist erfindungsgemäß ein Verfahren zur Stromerzeugung mit der vorstehend erläuterten Vorrichtung vorgesehen, wobei der trichterförmige Laufradkörper in einer Durchströmrichtung von dem Einlassbereich in Richtung des Auslassbereichs durchströmt wird, sodass der trichterförmige Laufradkörper beschleunigt, und wobei das Wasser aufgrund der Fliehkraft sowie der Strömungseigenschaften des erzeugten Wasserstrudels entgegen der abfließenden Durchströmrichtung im trichterförmigen Laufradkörper für zumindest zwei oder mehr Umläufe verbleibt und durch einen Spalt zwischen Laufradschaufel und Innenwandung des Laufradkörpers hindurchströmt und den Laufradkörper durch Beaufschlagung der Laufradschaufeln in eine Drehbewegung versetzt.

Die vorstehend an Hand der erfindungsgemäßen Vorrichtung beschriebenen Vorteile gelten analog für das erfindungsgemäße Verfahren.

Der Strudel kann sich in einem entgegen der Durchströmrichtung liegenden Strudelbereich des Laufradkörpers halten, sodass das Wasser eine Zeit lang in dem Strudelbereich des trichterförmigen Laufradkörpers verbleibt.

Durch den mehrmaligen Umlauf von den Wasserstrudel bildenden Schichten kann der trichterförmige Laufradkörper, im Bereich seines größten Durchmesser, in dem auch die Rotationsbewegung des Laufradkörpers abgenommen wird, wie ein Schwungrad wirken, wobei durch die übereinanderliegenden Schichten eine relativ große Schwungmasse aufgebaut wird, sodass beim Generatorwiderstand eine stabile Rotation des trichterförmigen Laufradkörpers erfolgt, wobei dass im trichterförmigen Laufradkörper vorhandene Wasser bzw. dessen energiereiche Schichten geben zunächst ihre Energie an die Laufradschaufeln abgeben und sich dann in einer Art Schwall entgegen der Durchströmrichtung der Turbineneinrichtung und anschließend in Richtung der Rotationsachse bewegen, wobei diese dann in Richtung des Auslassbereiches der Turbineneinrichtung strömen, so dass das auf diese Weise ablaufende Wasser dann aufgrund der vorhandenen potenziellen Energie zwischen dem entgegen der Durchströmungsrichtung liegenden Einlassbereich der Turbineneinrichtung und dem Auslassbereich beschleunigt.

Die erfindungsgemäße Vorrichtung wird im Folgenden anhand der Figuren näher erläutert. Diese zeigen in:
Figur 1 eine perspektivische Darstellung der erfindungsgemäßen Strömungsmaschine zum Bereitstellen elektrischer Energie mit einem freigeschnittenen Bereich gemäß einem ersten Ausführungsbeispiel,
Figur 2 eine seitliche, geschnittene Darstellung eines erfindungsgemäßen trichterförmigen Laufradkörpers der Strömungsmaschine,
Figur 3 eine perspektivische, seitlich geschnittene Darstellung des trichterförmigen Laufradkörpers,
Figur 4 eine Skizze einer Fibonacci-Spirale,
Figur 5 eine schematische Darstellung eines Wasserstrudels, wobei das Wasser aus der Strudelumgebung wieder ansteigt, und dann wieder in den Strudel zu gelangt,
Figur 6 eine perspektivische Darstellung der erfindungsgemäßen Strömungsmaschine zum Bereitstellen elektrischer Energie gemäß einem zweiten Ausführungsbeispiel,
Figur 7 die Darstellung aus Figur 6 in einer teilweise freigeschnittenen seitlichen Ansicht,
Figur 8 die Darstellung aus Figur 6 in einer teilweise freigeschnittenen Draufsicht von oben,
Figur 9 eine erfindungsgemäße Zuführeinrichtung in einer perspektivischen Darstellung mit einem teilweise freigeschnittenen Einlassbereich,
Figur 10 die Zuführeinrichtung aus Figur 9 in einer weiteren perspektivischen Darstellung, und
Figur 11 eine Generatoreinrichtung der erfindungsgemäßen Strömungseinrichtung mit Axialflussmagnet in einer perspektivischen Darstellung.

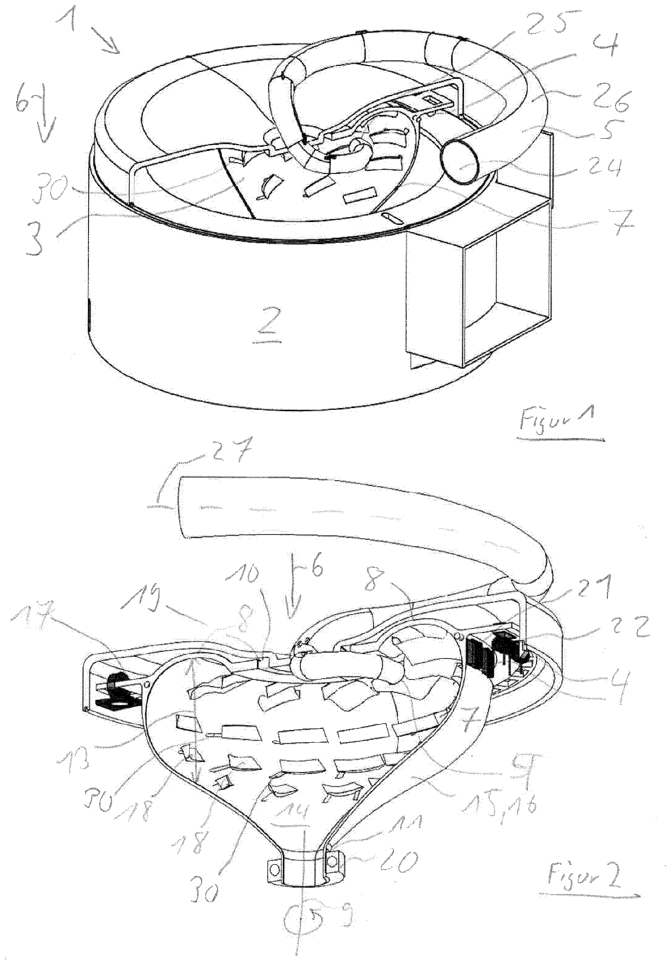

Die erfindungsgemäße Strömungsmaschine 1 wird im Folgenden anhand eines ersten Ausführungsbeispiels näher erläutert (Figuren 1 bis 3).

Diese Strömungsmaschine 1 umfasst eine Gehäuseeinrichtung 2, eine in der Gehäuseeinrichtung aufgenommene Turbineneinrichtung 3, eine Stromerzeugungseinrichtung 4 und eine Flüssigkeitszuführeinrichtung 5.

Die Strömungsmaschine ist ausgebildet, um von einer Betriebsflüssigkeit, vorzugsweise Wasser, in einer Durchströmrichtung 6 durchströmt zu werden.

Die Turbineneinrichtung 3 umfasst einen in etwa trichterförmigen Laufradkörper 7. An einem entgegen der Durchströmrichtung liegenden Ende des Laufradkörpers 7 ist dieser von einer Schwallwandung 8 begrenzt. Die Schwallwandung 8 erstreckt sich im Wesentlichen quer zur Durchströmrichtung 6 bzw. quer zu einer Rotationsachse 9.

Axial fluchtend zur Rotationsachse 9 sind am in Durchströmrichtung 6 liegenden Ende sowie entgegen der Durchströmrichtung 6 liegenden Ende kreisring- bzw. rohrförmige Lageraufnahmeabschnitte 10, 11 vorgesehen.

Die Schwallwandung 8 sowie ein entgegen der Durchströmrichtung 6 liegender Einlassbereich 12 des Laufradkörpers 7 bilden in etwa einen kreisringförmigen Strudelabschnitt 13 aus, in dem die Flüssigkeit aufgrund der Fliehkraft zunächst gegen eine Innenwandung 14 des Laufradkörpers 7 sowie gegen die Schwallwandung 8 gedrückt wird.

Eine Mantelwandung 15 des Laufradkörpers 7 ist in radialer Richtung vollständig geschlossen.

In einem Bereich des größten Durchmessers des Laufradkörpers 7 ist an einer Außenwandung 16 des Laufradkörpers 7 ein sich quer zur Rotationsachse erstreckender ringförmiger Aufnahmeabschnitt 17 angeformt bzw. vorgesehen.

An der Innenwandung 14 des Laufradkörpers 7sind radial umlaufend und gleich beabstandet voneinander Widerstandsschaufeln bzw. Laufradschaufeln 18 an der Innenwandung 14 des Laufradkörpers 7 angeformt.

Über, in den rohrförmigen Lageraufnahmeabschnitten 10, 11 angeordnete, Lagereinrichtungen 19, 20 ist die Turbineneinrichtung 3 in der Gehäuseeinrichtung drehbar gelagert und mit dieser verbunden.

Die Gehäuseeinrichtung 2 ist in etwa zylinderförmig ausgebildet. Die Gehäuseeinrichtung 2 kann jedoch auch in einer anderen geeigneten Form, beispielsweise quaderförmig oder würfelförmig oder konisch bzw. kegel-/kegelstumpfförmig, ausgebildet sein.

Gemäß diesem Ausführungsbeispiel ist die Stromerzeugungseinrichtung 4 als Generatoreinrichtung ausgebildet.

Die Generatoreinrichtung umfasst einen Rotor und einen Stator (nicht dargestellt), wobei der

Rotor im Bereich des größten Durchmessers am äußeren Umfang der Mantelwandung 15 des Laufradkörpers 7 angeordnet ist und der Stator, entsprechend an einer Innenwandung der Gehäuseeinrichtung 2 vorgesehen ist.

Ein Rotor 21 der Generatoreinrichtung ist durch Neodym-Magnete ausgebildet. Es können jedoch auch andere geeignete Magnete bzw. Spulen vorgesehen sein. Der Rotor 21 ist radial umlaufend und gleich beabstandet voneinander (im Falle von Magneten) oder aber als durchgängige Wicklung am Aufnahmeabschnitt 17 des trichterförmigen Laufradkörpers 7 angeordnet.

Ein Stator 22 der Generatoreinrichtung ist entsprechend an einer Innenwandung 23 der Gehäuseeinrichtung 2 angeordnet.

Durch das vom Rotor 21 mit einem Dauermagneten oder einem Elektromagneten (Feldspule oder Erregerwicklung genannt) erzeugte, umlaufende magnetische Gleichfeld wird in den Leitern oder Leiterwicklungen des Stators 22 durch die Lorentzkraft elektrische Spannung induziert.

Somit wird die Generatoreinrichtung 4 durch den Rotor 21 die Magneten (Dauer oder Elektromagneten), die am Aufnahmeabschnitt 17 fixiert sind und durch den Stator bzw. die Induktionsspulen bzw. die Magnetspulen an der Gehäuseeinrichtung 2 ausgebildet.

Die Flüssigkeitszuführeinrichtung 5 ist in etwa spiral- bzw. schneckenförmig ausgebildet. Vorzugsweise folgt die Spiralform der Flüssigkeitszuführeinrichtung 5 einer Fibonacci-Spirale bzw. -Kurve.

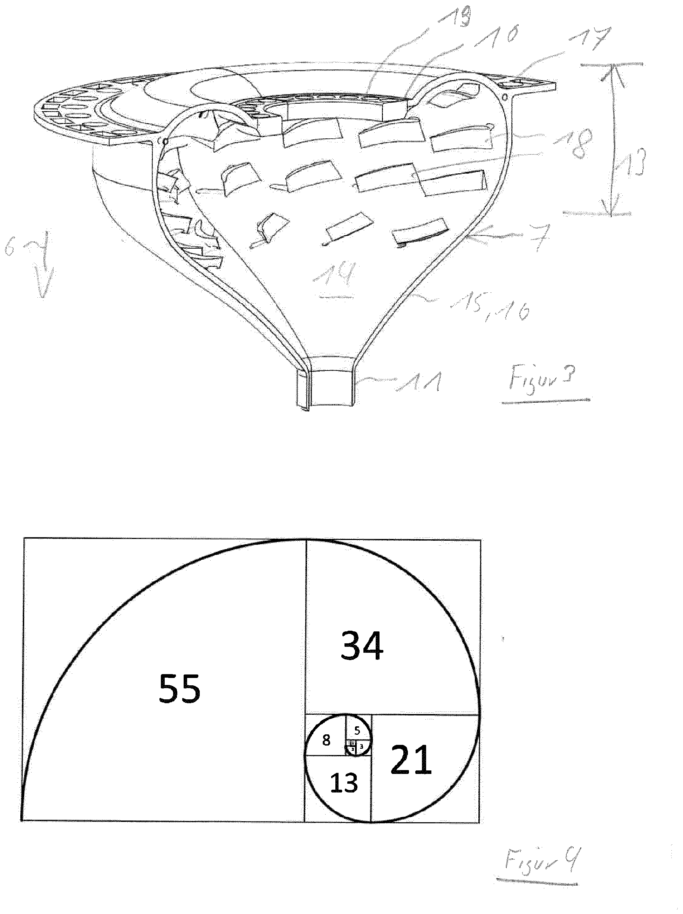

Eine derartige Fibonacci-Spirale lässt sich wie folgt beschreiben (Figur 4). Fügt man an ein Quadrat (1) ein weiteres gleiches Quadrat (1), so dass nun die Gesamtstrecke der Außenkanten als Grundlage für ein neues Quadrat (2) dient, ergibt sich ein Rechteck (1, 1, 2). Wird dieses Prinzip weiter fortgeführt (Strecke 2 und 1 ergeben Quadrat 3; Strecke 2 und 3 ergeben Quadrat 5; usw.) bilden sich immer wieder neue Rechtecke, die genau nach den Proportionen des Goldenen Schnittes geteilt sind. In diese Quadrate lässt sich nun die entsprechende Spirale zeichnen.

Die Flüssigkeitszuführeinrichtung 5 ist rohrförmig bzw. in Form eines Rohres 26 ausgebildet und weist einen Einlass 24 sowie einen Auslass 25 auf. Der Einlass 24 bzw. dessen Querschnitt ist größer als der Auslass 25 bzw. dessen Querschnitt.

Eine Mittelachse 27 der Flüssigkeitszuführeinrichtung bzw. des Auslasses 25 münden in etwa tangential in den Einlassbereich 13 des Laufradkörpers 7 bzw. in den Bereich des größten Querschnitts des Laufradkörpers.

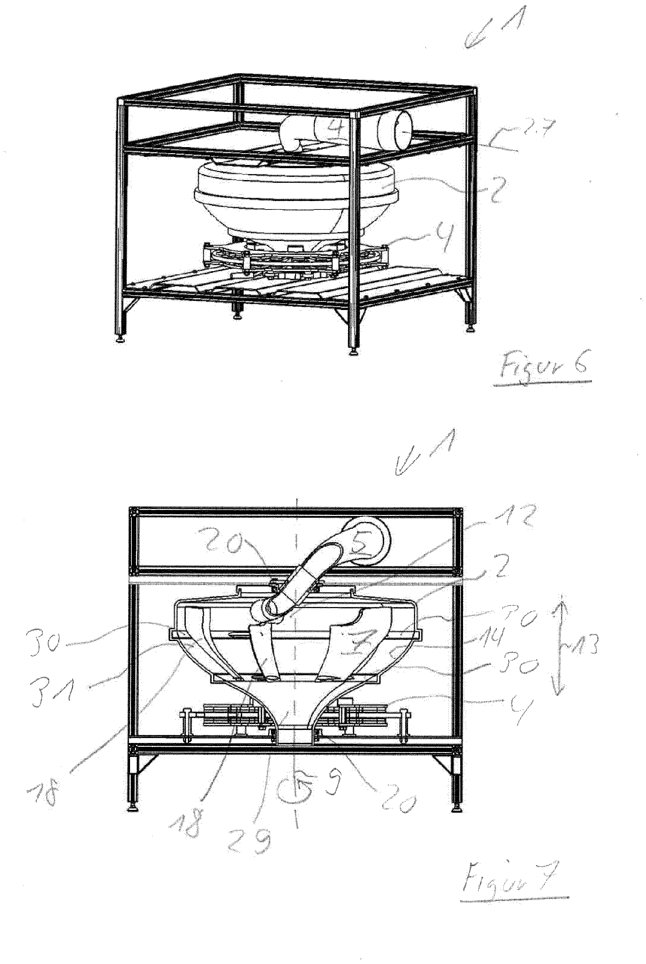

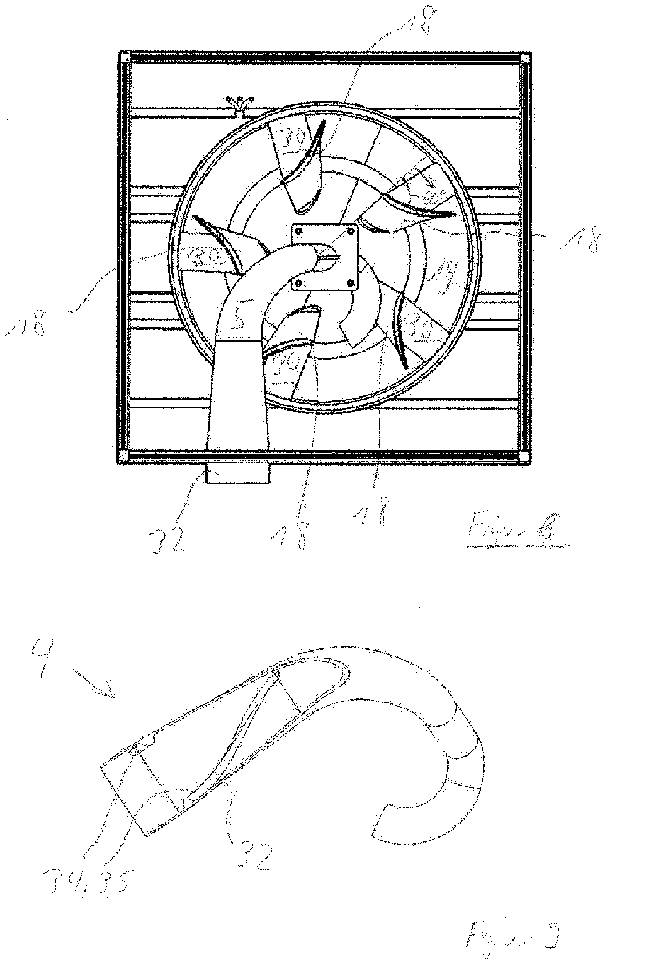

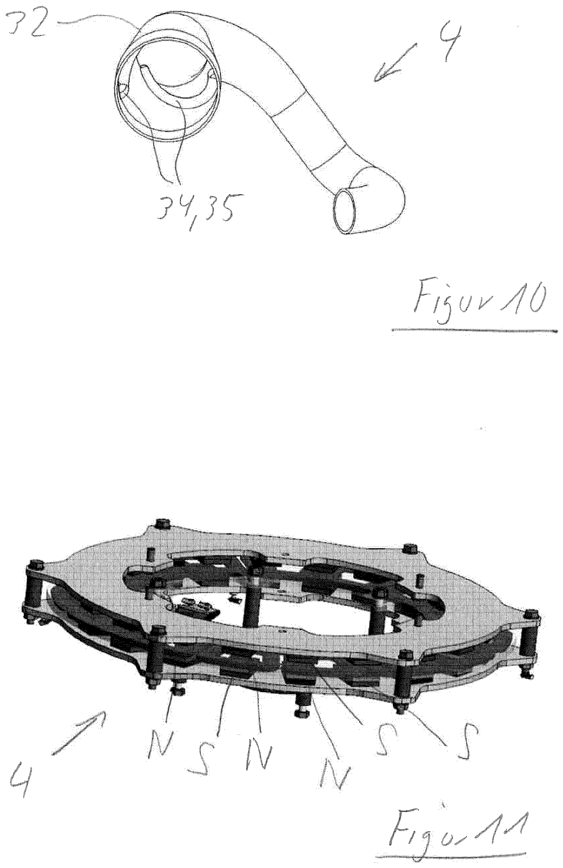

Im Folgenden wird die erfindungsgemäße Strömungsmaschine gemäß einem zweiten Ausführungsbeispiel beschrieben (Figuren 6 bis 11). Sofern nichts anderes eschrieben ist umfasst die Strömungsmaschine gemäß dem zweiten Ausführungsbeispiel die gleichen technischen Merkmale wie die Strömungsmaschine gemäß dem ersten Ausführungsbeispiel. Gleiche Bauteile sind mit den gleichen Bezugszeichen versehen.

Gemäß dem zweiten Ausführungsbeispiel sind fünf Laufradschaufeln 18 vorgesehen, die konzentrisch um die Rotationsachse 9 und radial gleich beabstandet voneinander angeordnet sind.

Die Laufradschaufeln 18 erstrecken sich in einem Winkel von 30° bis 80° bzw. 45° bis 70° und vorzugsweise 60° gegenüber einem Radius des Lauradkörpers 7 (27) radial nach außen bzw. weisen einen solchen Anstellwinkel bezüglich der Strömung auf.

In vertikaler Richtung erstrecken sich die Laufradschaufeln 18 über den gesamten Strudelabschnitt 13 der Turbineneinrichtung 3.

Die Laufradschaufeln 18 bilden in radialer Richtung nach außen ausgehend von der Rotationsachse 9 ein hydrodynamisches Profil aus, welches ähnlich wie eine Tragfläche ausgebildet ist, sodass die Laufradschaufeln eine konvexe Fläche in etwa parallel zur Rotationsachse 9 und eine konkave Fläche im Bereich der Innenwandung des Laufradkörpers 7 ausbilden. Dabei ist vorgesehen, dass der anströmende Strudel eine senkrecht zur Anströmung der Laufradschaufeln 8 wirkende Kraft erzeugt. Durch die Umlenkung wird dem Fluid ein Impuls übertragen. Gegnüber einer Anströmrichtung sind die Laufradschaufeln mit einem Anstellwinkel von in etwa 60° geneigt.

Alternativ können auch 3,4,6,7,8,9, 10,11 oder 12 radial gleich beabstandet voneinander angeordnete Laufradschaufeln 18 vorgesehen sein. Möglich ist auch eine, zwei oder drei oder vier oder mehr Reihen Laufradschaufeln in vertikaler Richtung übereinander im Strudelbereich 13 anzuordnen.

Die Laufradschaufeln 18 sind mittels entsprechender Abstandhalter 30 mit der Innenwandung des Laufradkörpers 7 im Bereich des Strudelabschnittes 13 verbunden. Die Abstandshalter sind in etwa horizontal angeordnet und ebenfalls profiliert ausgebildet.

Zwischen einer in etwa parallel zur Innenwandung des Laufradkörpers verlaufenden und entgegen der Strömungsrichtung liegende Kante der Laufradschaufel 8 der Innenwandung des Laufradkörpers ist ein Spalt 31 ausgebildet.

Dieser Spalt kann eine Art Venturi Düse ausbilden bzw. kann es zu einem Venturi-Effekt zwischen der entsprechende Kante der Laufradschaufeln und der Innenwandung des Laufradkörpers im Bereich des Spaltes kommen.

Das Wasser fließt durch den Spalt zwischen 18 und der Innenwandung des Laufradkörpers 7. Dieser Spalt bildet eine schlitzförmige Engstelle nach Art einer Venturi-Düse aus an der der dynamische Druck (Staudruck) maximal und der statische Druck minimal ist. Die Geschwindigkeit des strömenden Wasser steigt im Verhältnis der Querschnitte beim Durchströmen des eingeschnürten Spaltes an, weil überall dieselbe Menge durchfließt.

Dadurch dass das Wasser durch den Spalt hindurchfließt und beschleunigt wird steigt der hydrodynamische Druck und das Wasser steigt im Strudel an der Innenwandung des Laufradkörpers in vertikaler Richtung nach oben an und die nachfolgenden Laufradschaufeln werden mit Wasser aus dem Strudel mit einer höheren Geschwindigkeit angeströmt.

Die Flüssigkeitszuführeinrichtung 5 ist gemäß diesem Ausführungsbeispiel mit einem geraden Zuführtrichter 32 versehen. Dieser mündet dann in die Form der Fibonacci-Spirale der Flüssigkeitszuführeinrichtung 5 gemäß dem ersten Ausführungsbeispiel. Der Auslass 25 der Flüssigkeitszuführeinrichtung ist derart angeordnet, dass die Flüssigkeitszuführeinrichtung 5 durchströmendes Wasser im Bereich einer Strömungsaussparung 33 der Laufradschaufel 18 hindurchtritt, einen Wasserstrudel ausbildet und im Anschluss die in Rotationsrichtung liegende nächste Laufradschaufel trifft, wobei die Laufradschaufeln 18 durch den mehrmaligen Umlauf des Wassers im Wasserstrudel mehrmals mit dem Wasser beaufschlagt werden.

In der Flüssigkeitszuführeinrichtung 5 ist ein Drallerzeuger 34, vorzugsweise im Bereich des Zuführtrichters, angeordnet. Dieser Drallerzeuger 34 umfasst rinnenartig ausgebildete Leitprofile 36, die an einer inneren Mantelwandung der Flüssigkeitszuführeinrichtung 5 spiralförmig angeordnet sind. Auf diese Weise wird das durch die Flüssigkeitszuführeinrichtung 5 strömende Wasser mit einem Drall beaufschlagt. Durch diesen Drall wird das Wasser zusätzlich beschleunigt, die Reibungsverluste werden minimiert und anschließend tangential zur inneren Mantelwandung in Drehrichtung um die Rotationsachse 9 in den Laufradkörper 7 eingebracht.

Die Generatoreinrichtung 4 ist als Axialflussgenerator ausgebildet und im vorliegenden Ausführungsbeispiel unterhalb des Strudelabschnittes mit der Außenwandung des Laufradkörpers 7 im Auslassbereich 29 gekoppelt.

Alternativ kann auch vorgesehen sein, dass eine Generatorwelle der Generatoreinrichtung mit dem Laufradkörper gekoppelt ist und von diesem angetrieben wird.

Die Stromerzeugungseinrichtung kann auch Magnete und Induktionsspulen umfassen, wobei die Magnete im Bereich des größten Durchmessers am äußeren Umfang der Mantelwandung des Laufradkörpers angeordnet sind und die Induktionsspulen, entsprechend an der Gehäuseeinrichtung vorgesehen sind.

Die Stromerzeugungseinrichtung kann auch mittels Piezoaktivierung erfolgen, wobei im Bereich des größten Durchmessers am äußeren Umfang der Mantelwandung des Laufradkörpers Aktuatoren angeordnet sind und entsprechend an der Gehäuseeinrichtung Piezoelemente 28 vorgesehen sind.

Diese Flüssigkeitszuführeinrichtung umfasst einen Einlass und einen Auslass, wobei eine Mittelachse des Auslasses in den Einlassbereich des Laufradkörpers in etwa tangential in dem Bereich des größten Durchmessers der Innenwandung des trichterförmigen Laufradkörpers mündet.

Dadurch, dass der Auslass der Flüssigkeitszuführeinrichtung bzw. dessen Mittelachse in den Einlassbereich des Laufradkörpers in etwa tangential in dem Bereich des größten Durchmessers der Innenwandung des Laufradkörpers mündet, wird die mittels der Flüssigkeitszuführeinrichtung zugeführte Flüssigkeit in einem optimalen Winkel auf die Widerstandsschaufeln des trichterförmigen Laufradkörpers geleitet und bildet den energiereichen mehrschichtigen Strudel aus.

Dadurch, dass die Flüssigkeitszuführeinrichtung spiral- bzw. schneckenförmig ausgebildet ist, wird das in die Turbineneinrichtung strömende Wasser schon beim Zuführen in eine spiralförmige Bewegung bzw. einen Strudel versetzt bzw. mit einem Drall beaufschlagt.

Dadurch, dass der Einlassquerschnitt der Flüssigkeitszuführeinrichtung größer als der Auslassquerschnitt der Flüssigkeitszuführeinrichtung ausgebildet ist, wird die zugeführte Flüssigkeit durch die entsprechende Querschnittsverengung beschleunigt und weist somit mehr kinetische Energie beim Auftreffen auf die Widerstandsschaufeln des trichterförmigen Laufradkörpers auf.

Auf diese Weise erfährt die zugeführte Flüssigkeit eine gleichmäßige Beschleunigung.

Dadurch, dass der, entgegen einer Durchströmrichtung der Turbineneinrichtung liegende, Einlass gegenüber dem in der Turbineneinrichtung angeordneten Auslass einen Höhenversatz aufweist. Auf diese Weise wird die die Flüssigkeitszuführeinrichtung durchströmende Flüssigkeit aufgrund der potenziellen Energie durch den Höhenversatz zusätzlich beschleunigt.

Im Folgenden wird der Betrieb der erfindungsgemäßen Vorrichtung bzw. ein Verfahren zur Stromerzeugung mit dieser Vorrichtung näher beschrieben.

Die Turbineneinrichtung bzw. der trichterförmige Laufradkörper wird in der Durchströmrichtung durchströmt. Auf diese Weise wird der trichterförmige Laufradkörper beschleunigt. Hierbei steigt das Wasser aufgrund der Fliehkraft und der durch den Strudel erzeugten aufströmenden Strömungsschichten entgegen der Durchströmrichtung im trichterförmigen Laufradkörper und versetzt diesen in Drehbewegung. Dieser Strudel hält sich in einem entgegen der Durchströmrichtung liegenden Bereich des Laufradkörpers. Das bedeutet das Wasser verbleibt im Gegensatz zu herkömmlichen Turbinen eine Zeit lang in diesem Strudelbereich 13 des trichterförmigen Laufradkörpers. Auf diese Weise steht der erfindungsgemäßen Vorrichtung eine große Menge an Rotationsenergie zur Verfügung.

Insbesondere bilden sich an der Innenwandung des Turbinenraumes im Bereich des Strudels mehrere übereinanderliegende energiereiche Schichten.

Durch den mehrmaligen Umlauf der Schichten wirkt der trichterförmige Laufradkörper, im Bereich seines größten Durchmesser, in dem auch die Rotationsbewegung des Laufradkörpers abgenommen wird, wie ein Schwungrad, wobei durch die übereinanderliegenden Schichten eine relativ große Schwungmasse aufgebaut wird. Das im trichterförmigen Laufradkörper vorhandene Wasser bzw. dessen energiereiche Schichten geben zunächst ihre Energie an die Laufradschaufeln ab und bewegen sich dann in einer Art Schwall entgegen der Durchströmrichtung der Turbineneinrichtung und anschließend in Richtung der Rotationsachse, wobei diese dann in Richtung des Auslassbereiches 29 der Turbineneinrichtung strömen. Das auf diese Weise ablaufende Wasser beschleunigt dann aufgrund der vorhandenen potenziellen Energie plus die abfließende Rotationsbewegung des Strudels zwischen dem entgegen der Durchströmrichtung liegenden Einlassbereich 12 der Turbineneinrichtung und dem Auslassbereich 29.

Die erfindungsgemäße Strömungsmaschine benötigt daher keine große potenzielle Energie bezüglich des bereitgestellten Wassers, welches die Turbine durchströmt. Erfindungsgemäß wird die kinetische Energie des Wassers zunächst in mechanische Energie und anschließend in elektrische Energie umgewandelt.

Der Erfinder der vorliegenden Erfindung hat erkannt, dass durch die Ausbildung einer drehbar gelagerten Turbineneinrichtung mit einem in etwa trichterförmigen Laufradkörper mit einer geschlossenen radialen Mantelwandung die Bildung eines stabilen Strudels ermöglicht wird. Dieser Strudel ist vergleichbar mit dem eines Wirbelsturms.

Der trichterförmige Laufradkörper wird durch die Spiralbewegung des erzeugten Wasserstroms über die Widerstands- bzw. Laufradschaufeln angetrieben.

Dadurch, dass bspw. der Rotor der Generatoreinrichtung im Bereich des größten Durchmessers am äußeren Umfang der Mantelwandung des Laufradkörpers angeordnet ist, bildet der Rotor der Generatoreinrichtung eine Art Schwungrad aus. Die Schwungmasse beschleunigt zum einen die Drehbewegung der Turbineneinrichtung um die Rotationsachse und gibt zudem Stabilität, wenn elektrische Leistung abgenommen wird. Mittels der Rotationsbewegung können der Stator über den Rotor bzw. die Induktionsspulen über die Magnete oder die Piezoelemente 28 über die Aktuatoren angeregt werden.

Ein entgegen der Durchströmrichtung liegender Bereich des trichterförmigen Laufradkörpers kann mittels einer in der Draufsicht kreisringförmigen und im Querschnitt wannenartigen Schwallwandung begrenzt sein. Diese bildet eine entgegen der Durchströmrichtung liegende räumliche Begrenzung des Turbinenraumes aus.

Auf diese Weise wird die Flüssigkeit, die zunächst tangential in den trichterförmigen Laufradkörper eingebracht wird und dann aufgrund der Fliehkraft aufsteigt, umgeleitet und auf diese Weise die darin enthaltene Energie zusätzlich nutzbar gemacht.

Zudem begünstigt die Schwallwandung auch den Ablauf der energiearmen Schichten der Flüssigkeit.

Weiterhin hat der Erfinder der vorliegenden Erfindung herausgefunden, dass durch eine derartige Schwallwandung beim Ablaufen eine Art Windhose entsteht, wodurch ein Unterdruck erzeugt wird. Diese Windhose bzw. diese Luftsäule erzeugt eine Art Vakuum im Turbinenraum, das ablaufende Wasser beim Abströmen durch den Luftwirbel von unten angesaugt wird.

Dadurch, dass erfindungsgemäß ein Unterdruck beim Abfließen der Flüssigkeit bzw. eine entsprechende in etwa trichter- bzw. tornadoförmige Luftsäule beim Abfließen im trichterförmigen Laufradkörper entsteht, wird eine viel stärkere Wirbelbewegung erzeugt.

Generell erzeugt der Strudel eine Verdichtung der Wasserschichten, wobei das Wirbelauge des Strudels nicht mit Wasser gefüllt ist. Demgemäß wird der Austrittsquerschnitt im Auslassbereich des trichterförmigen Laufradkörpers nicht vollständig ausgenutzt, so dass Luft einströmen kann, und den vorstehend genannten Luftwirbel ausbilden kann.

Die Flüssigkeitsschichten unterschiedlicher Energiedichte halten die Beschleunigung des Laufradkörpers hoch.

Die Drehbewegung des trichterförmigen Laufradkörpers wird dann mittels der Stromerzeugungseinrichtung in elektrische Energie umgewandelt.

### Bezugszeichenliste

- 1: Strömungsmaschine
- 2: Gehäuseeinrichtung
- 3: Turbineneinrichtung
- 4: Generatoreinrichtung
- 5: Flüssigkeitszuführeinrichtung
- 6: Durchströmrichtung
- 7: Laufradkörper
- 8: Schwallwandung
- 9: Rotationsachse
- 10: rohrförmiger Lageraufnahmeabschnitt
- 11: rohrförmiger Lageraufnahmeabschnitt
- 12: Einlassbereich
- 13: Strudelabschnitt
- 14: Innenwandung
- 15: Mantelwandung
- 16: Außenwandung
- 17: Aufnahmeabschnitt
- 18: Laufradschaufeln
- 19: Lagereinrichtung
- 20: Lagereinrichtung
- 21: Rotor
- 22: Stator
- 23: Innenwandung
- 24: Einlass
- 25: Auslass
- 26: Rohr
- 27: Mittelachse
- 28: Piezoantrieb
- 29: Auslassbereich
- 30: Abstandshalter
- 31: Spalt
- 32: Zuführtrichter
- 33: Strömungsaussparung
- 34: Drallerzeuger
- 35: Leitprofil

## Patentansprüche

1. Strömungsmaschine (1) zum Bereitstellen von elektrischer Energie umfassend,
eine Gehäuseeinrichtung (2)
eine in der Gehäuseeinrichtung (2) um eine Rotationsachse (9) drehbar gelagerte Turbineneinrichtung (3), wobei die Turbineneinrichtung (3) einen in etwa trichterförmigen Laufradkörper (7) mit einem Einlassbereich (12), einem Auslassbereich (29) und einer geschlossenen radialen Mantelwandung (15) umfasst, die einen Turbinenraum begrenzt, und wobei im Turbinenraum an einer Innenwandung (14) des Laufradkörpers (7) radial umlaufend Laufradschaufeln (18) angeordnet sind, wobei die Laufradschaufeln (18) über Abstandshalter (30) mit der Innenwandung (14) des Laufradkörpers (7) derart verbunden sind, dass zwischen der Innenwandung (14) des Laufradkörpers (7) und den Laufradschaufeln (18) ein Spalt (31) ausgebildet wird, sodass ein Wasserstrudel an der Innenwandung (14) des Laufradkörpers (7) ausbildbar ist, und
eine Stromerzeugungseinrichtung, die mit dem Laufradkörper (7) gekoppelt ist
**dadurch gekennzeichnet,**
**dass** sich die Laufradschaufeln (18) von dem entgegen einer Durchströmrichtung (6) liegenden Ende des trichterförmigen Laufradkörpers (7) bis in etwa 50% bzw. 60% bzw. 70% bzw. 75% bzw. 80% bzw. 90% oder auch über die gesamte Höhe in vertikaler Richtung hin zum in Durchströmrichtung (6) liegenden Ende des trichterförmigen Laufradkörpers (7) erstrecken

2. Strömungsmaschine (1) gemäß Anspruch 1,
**dadurch gekennzeichnet,**
**dass** sich die Abstandshalter (30) in einer in etwa horizontalen Ebene quer zur Rotationsachse (9) erstrecken.

3. Strömungsmaschine (1) gemäß Anspruch 1 oder 2,
**dadurch gekennzeichnet,**
**dass** die Stromerzeugungseinrichtung (4) eine Generatoreinrichtung (4) ist, die einen Rotor (21) und einen Stator (22) umfasst, wobei der Rotor (21) im Bereich des geringsten Durchmessers in etwa im Auslassbereich (29) am äußeren Umfang der Mantelwandung (15) des Laufradkörpers (7) angeordnet ist und der Stator (22), entsprechend an der Gehäuseeinrichtung (2) vorgesehen ist, wobei die Generatoreinrichtung (4) als Axialflussmaschine ausgebildet ist, oder
**dass** die Stromerzeugungseinrichtung (4) eine Generatoreinrichtung (4) ist, die einen Rotor (21) und einen Stator (22) umfasst, wobei der Rotor (21) im Bereich des größten Durchmessers am äußeren Umfang der Mantelwandung (15) des Laufradkörpers (7) angeordnet ist und der Stator (22), entsprechend an der Gehäuseeinrichtung (2) vorgesehen ist, oder dass eine Generatorwelle der Generatoreinrichtung (4) mit dem Laufradkörper (7) gekoppelt ist und von diesem angetrieben wird, oder
**dass** die Stromerzeugungseinrichtung (4) Magnete und Induktionsspulen umfasst, wobei die Magnete im Bereich des größten Durchmessers am äußeren Umfang der Mantelwandung (15) des Laufradkörpers (7) angeordnet sind und die Induktionsspulen, entsprechend an der Gehäuseeinrichtung (2) vorgesehen sind, oder
**dass** die Stromerzeugungseinrichtung (4) mittels Piezoaktivierung erfolgt, wobei im Bereich des größten Durchmessers am äußeren Umfang der Mantelwandung (15) des Laufradkörpers (7) Aktuatoren angeordnet sind und entsprechend an der Gehäuseeinrichtung (2) Piezoelemente (28) vorgesehen sind.

4. Strömungsmaschine (1) gemäß Anspruch 1 oder 2,
**dadurch gekennzeichnet,**
**dass** eine Flüssigkeitszuführeinrichtung (5) spiralförmig mit einem Einlass (24) und einem Auslass (25) ausgebildet ist, wobei eine Mittelachse (27) des Auslasses (25) in den Einlassbereich (12) des Laufradkörpers (7) in etwa tangential in den Bereich des größten Durchmessers der Innenwandung (14) des Laufradkörpers (7) mündet.

5. Strömungsmaschine (1) gemäß Anspruch 4,
**dadurch gekennzeichnet,**
**dass** an einer inneren Mantelwandung (15) der Flüssigkeitszuführeinrichtung (5) vorzugsweise im Bereich eines Zuführtrichters ein Drallerzeuger (34) mit Leitprofilen vorgesehen ist die an der inneren Mantelwandung (15) spiralförmig angeordnet sind.

6. Strömungsmaschine (1) gemäß Anspruch 4 oder 5,
**dadurch gekennzeichnet,**
**dass** ein Einlassquerschnitt der Flüssigkeitszuführeinrichtung (5) größer als ein Auslassquerschnitt der Flüssigkeitszuführeinrichtung (5) ist.

7. Strömungsmaschine (1) gemäß einem der Ansprüche 1 bis 6,
**dadurch gekennzeichnet,**
**dass** der trichterförmige Laufradkörper (7) bis auf eine Einlassöffnung und eine Ablauföffnung in Verbindung mit dem Gehäuse ein im Wesentlichen geschlossenes System ausbildet.

8. Verfahren zur Stromerzeugung mit einer Vorrichtung gemäß einem der Ansprüche 1 bis 7, wobei der trichterförmige Laufradkörper (7) in einer Durchströmrichtung (6) von dem Einlassbereich (12) in Richtung des Auslassbereichs durchströmt wird, sodass der trichterförmige Laufradkörper (7) beschleunigt, und wobei das Wasser aufgrund der Fliehkraft sowie der Strömungseigenschaften des erzeugten Wasserstrudels entgegen der abfließenden Durchströmrichtung (6) im trichterförmigen Laufradkörper (7) für zumindest zwei oder mehr Umläufe verbleibt und durch einen Spalt (31) zwischen Laufradschaufel (18) und Innenwandung (14) des Laufradkörpers (7) hindurchströmt und den Laufradkörper (7) durch Beaufschlagung der Laufradschaufeln (18) in eine Drehbewegung versetzt.

9. Verfahren gemäß Anspruch 8,
**dadurch gekennzeichnet,**
**dass** der Strudel sich in einem entgegen der Durchströmrichtung (6) liegenden Strudelbereich (13) des Laufradkörpers (7) hält, sodass das Wasser eine Zeit lang in dem Strudelbereich (13) des trichterförmigen Laufradkörpers (7) verbleibt.

10. Verfahren gemäß Anspruch 8 oder 9,
**dadurch gekennzeichnet,**
**dass** durch den mehrmaligen Umlauf von den Wasserstrudel bildenden Schichten der trichterförmige Laufradkörper (7), im Bereich seines größten Durchmesser, in dem auch die Rotationsbewegung des Laufradkörpers (7) abgenommen wird, wie ein Schwungrad wirkt, wobei durch die übereinanderliegenden Schichten eine relativ große Schwungmasse aufgebaut wird, sodass beim Generatorwiderstand eine stabile Rotation des trichterförmigen Laufradkörpers (7) erfolgt, wobei dass im trichterförmigen Laufradkörper (7) vorhandene Wasser bzw. dessen energiereiche Schichten geben zunächst ihre Energie an die Laufradschaufeln (18) abgeben und sich dann in einer Art Schwall entgegen der Durchströmrichtung (6) der Turbineneinrichtung (3) und anschließend in Richtung der Rotationsachse (9) bewegen, wobei diese dann in Richtung des Auslassbereiches (29) der Turbineneinrichtung (3) strömen, so dass das auf diese Weise ablaufende Wasser dann aufgrund der vorhandenen potenziellen Energie zwischen dem entgegen der Durchströmungsrichtung (6) liegenden Einlassbereich (12) der Turbineneinrichtung (3) und dem Auslassbereich (29) beschleunigt.

## Claims

1. A continuous flow machine (1) for providing electric energy, comprising
a casing device (2),
a turbine device (3) supported in the casing device (2) so as to be rotatable around an axis of rotation (9), the turbine device (3) comprising a substantially funnel-shaped impeller body (7) having a inlet area (12), an outlet area (29) and a closed radial shell wall (15) delimiting a turbine space, and impeller blades (18) being arranged in the turbine space on an inside wall (14) of the impeller body (7) in a radially circumferential manner, the impeller blades (18) being connected to the inside wall (14) of the impeller body (7) by means of spacers (30) in such a manner that a gap (31) is formed between the inside wall (14) of the impeller body (7) and the impeller blades (18), so that a water vortex can be formed at the inside wall (14) of the impeller body (7), and
a power generation device coupled to the impeller body (7),
**characterized in that**
the impeller blades (18) extend, from the end of the funnel-shaped impeller body (7) located opposite the flow direction (6), by approximately 50% or 60% or 70% or 75% or 80% or 90% or also over the entire height in vertical direction toward the end of the funnel-shaped impeller body (7) located in the flow direction (6).

2. The continuous flow machine (1) according to claim 1,
**characterized in that**
the spacers (30) extend in an approximately horizontal plane transverse to the axis of rotation (9).

3. The continuous flow machine (1) according to claim 1 or 2,
**characterized in that**
the power generation device (4) is a generator device (4) comprising a rotor (21) and a stator (22), the rotor (21) being arranged in the area of the smallest diameter approximately in the outlet area (29) on the outer periphery of the shell wall (15) of the impeller body (7), and the stator (22) being provided in a corresponding manner on the casing device (2), the generator device (4) being designed as axial flow machine, or
the power generation device (4) is a generator device (4) comprising a rotor (21) and a stator (22), the rotor (21) being arranged in the area of the largest diameter on the outer periphery of the shell wall (15) of the impeller body (7), and the stator (22) being provided in a corresponding manner on the casing device (2), or a generator shaft of the generator device (4) is coupled to the impeller body (7) and driven by it, or
the power generation device (4) comprises magnets and induction coils, the magnets being arranged in the area of the largest diameter on the outer periphery of the shell wall (15) of the impeller body (7) and the induction coils being provided in a corresponding manner on the casing device (2), or
the power generation device (4) is realized by means of a piezo-activation, actuators being arranged in the area of the largest diameter on the outer periphery of the shell wall (15) of the impeller body (7) and piezoelectric elements (28) being provided in a corresponding manner on the casing device (2).

4. The continuous flow machine (1) according to claim 1 or 2,
**characterized in that**
a liquid supply device (5) is formed in the shape of a helix with an inlet (24) and an outlet (25), a center axis (27) of the outlet (25) into the inlet area (12) of the impeller body (7) opening approximately tangentially into the area of the largest diameter of the inside wall (14) of the impeller body (7).

5. The continuous flow machine (1) according to claim 4,
**characterized in that**
a swirl generator (34) having guiding profiles is provided on an inner shell wall (15) of the liquid supply device (5), preferably in the area of a supply funnel, the guiding profiles being spirally arranged on the inner shell wall (15).

6. The continuous flow machine (1) according to claim 4 or 5,
**characterized in that**
an inlet cross-section of the liquid supply device (5) is larger than an outlet cross-section of the liquid supply device (5).

7. The continuous flow machine (1) according to any of the claims 1 to 6,
**characterized in that**
the funnel-shaped impeller body (7), apart from an inlet opening and a drain opening in connection with the housing, constitutes a substantially closed system.

8. A method of power generation using a device according to any of the claims 1 to 7, wherein there is a flow through the funnel-shaped impeller body (7) in a flow direction (6) from the inlet area (12) toward the outlet area so that the funnel-shaped impeller body (7) is accelerated, and wherein the water remains, against the draining flow direction (6), in the funnel-shaped impeller body (7) for at least two or more circulations due to the centrifugal force as well as owing to the flow properties of the generated water vortex, and flows through a gap (31) between impeller blade (18) and inside wall (14) of the impeller body (7) and imparts a rotational movement to the impeller body (7) by acting upon the impeller blades (18).

9. The method according to claim 8,
**characterized in that**
the vortex is maintained in a vortex area (13) of the impeller body (7) located opposite the flow direction (6) so that water remains for a while in the vortex area (13) of the funnel-shaped impeller body (7).

10. The method according to claim 8 or 9,
**characterized in that**
due to the multiple circulation of layers forming the water vortex, the funnel-shaped impeller body (7), in the area of its largest diameter, in which the rotational movement of the impeller body (7) is also harvested, acts as a flywheel, wherein a relatively large inertial mass is built up by the superimposed layers so that a stable rotation of the funnel-shaped impeller body (7) takes place during the generator resistance, wherein the water present in the funnel-shaped impeller body (7) or its energy-rich layers first deliver their energy to the impeller blades (18) and then move in the manner of a flush against the flow direction (6) of the turbine device (3) and then toward the axis of rotation (9), wherein these then flow toward the outlet area (29) of the turbine device (3) so that the water flowing off in this manner is accelerated due to the potential energy present between the inlet area (12) of the turbine device (3) located against the flow direction (6) and the outlet area (29).

## Revendications

1. Turbomachine (1) destinée à fournir de l'énergie électrique, comprenant
un dispositif de boîtier (2),
un dispositif de turbine (3) logé dans le dispositif de boîtier (2) de manière tournante autour d'un axe de rotation (9), sachant que le dispositif de turbine (3) comprend un corps de roue mobile (7) approximativement en forme d'entonnoir comportant une zone d'entrée (12), une zone de sortie (29) et une paroi de virole (15) radiale fermée qui délimite un espace de turbine, et sachant que des ailettes de roue mobile (18) sont disposées de manière radialement périphérique dans l'espace de turbine au niveau d'une paroi intérieure (14) du corps de roue mobile (7), sachant que les ailettes de roue mobile (18) sont reliées via des entretoises (30) à la paroi intérieure (14) du corps de roue mobile (7) de telle manière qu'une fente (31) soit constituée entre la paroi intérieure (14) du corps de roue mobile (7) et les ailettes de roue mobile (18) de sorte qu'un tourbillon d'eau puisse se constituer au niveau de la paroi intérieure (14) du corps de roue mobile (7), et
un dispositif de génération de courant qui est couplé au corps de roue mobile (7),
**caractérisée en ce que**
les ailettes de roue mobile (18) s'étendent depuis l'extrémité du corps de roue mobile (7) en forme d'entonnoir située à rencontre d'une direction de traversée (6) à approximativement 50 % ou 60 % ou 70 % ou 75 % ou 80 % ou 90 % ou aussi sur toute la hauteur en direction verticale jusqu'à l'extrémité du corps de roue mobile (7) en forme d'entonnoir située dans la direction de traversée (6).

2. Turbomachine (1) selon la revendication 1,
**caractérisée en ce que**
les entretoises (30) s'étendent dans un plan approximativement horizontal transversalement à l'axe de rotation (9).

3. Turbomachine (1) selon la revendication 1 ou 2,
**caractérisée en ce que**
le dispositif de génération de courant (4) est un dispositif de génératrice (4) qui comprend un rotor (21) et un stator (22), sachant que le rotor (21) est disposé au niveau du plus petit diamètre approximativement dans la zone de sortie (29) au niveau de la périphérie extérieure de la paroi de virole (15) du corps de roue mobile (7) et le stator (22) est prévu de manière correspondante au niveau du dispositif de boîtier (2), sachant que le dispositif de génératrice (4) est constitué comme machine à flux axial, ou
**en ce que** le dispositif de génération de courant (4) est un dispositif de génératrice (4) qui comprend un rotor (21) et un stator (22), sachant que le rotor (21) est disposé au niveau du plus grand diamètre au niveau de la périphérie extérieure de la paroi de virole (15) du corps de roue mobile (7) et le stator (22) est prévu de manière correspondante au niveau du dispositif de boîtier (2), ou **en ce qu'**un arbre de génératrice du dispositif de génératrice (4) est couplé au corps de roue mobile (7) et est entraîné par celui-ci, ou
**en ce que** le dispositif de génération de courant (4) comprend des aimants et des bobines d'induction, sachant que les aimants sont disposés au niveau du plus grand diamètre au niveau de la périphérie extérieure de la paroi de virole (15) du corps de roue mobile (7) et les bobines d'induction sont prévues de manière correspondante au niveau du dispositif de boîtier (2), ou
**en ce que** le dispositif de génération de courant (4) est réalisé moyennant piézoactivation, sachant que des actionneurs sont disposés au niveau du plus grand diamètre au niveau de la périphérie extérieure de la paroi de virole (15) du corps de roue mobile (7) et des piézoéléments (28) sont prévus de manière correspondante au niveau du dispositif de boîtier (2).

4. Turbomachine (1) selon la revendication 1 ou 2,
**caractérisée en ce que**
un dispositif d'amenée de liquide (5) est constitué en forme d'hélice avec une entrée (24) et une sortie (25), sachant qu'un axe médian (27) de la sortie (25) dans la zone d'entrée (12) du corps de roue mobile (7) débouche de manière approximativement tangentielle au niveau du plus grand diamètre de la paroi intérieure (14) du corps de roue mobile (7).

5. Turbomachine (1) selon la revendication 4,
**caractérisée en ce que**
un tourbillonneur (34) présentant des profils directeurs qui sont disposés en forme d'hélice au niveau de la paroi de virole intérieure (15) est prévu au niveau d'une paroi de virole intérieure (15) du dispositif d'amenée de liquide (5) de préférence dans la zone d'une trémie d'amenée.

6. Turbomachine (1) selon la revendication 4 ou 5,
**caractérisée en ce que**
une section transversale d'entrée du dispositif d'amenée de liquide (5) est plus grande qu'une section transversale de sortie du dispositif d'amenée de liquide (5).

7. Turbomachine (1) selon l'une des revendications 1 à 6,
**caractérisée en ce que**
le corps de roue mobile (7) en forme d'entonnoir, hormis une ouverture d'entrée et une ouverture d'évacuation en liaison avec le boîtier, constitue un système sensiblement fermé.

8. Procédé de génération de courant présentant un dispositif selon l'une des revendications 1 à 7, sachant que le corps de roue mobile (7) en forme d'entonnoir est traversé dans une direction de traversée (6) depuis la zone d'entrée (12) vers la zone de sortie de sorte que le corps de roue mobile (7) en forme d'entonnoir accélère, et sachant que l'eau reste dans le corps de roue mobile (7) pendant au moins deux ou plus de deux circulations en raison de la force centrifuge ainsi que des propriétés d'écoulement du tourbillon d'eau généré à rencontre de la direction de traversée (6) et s'écoule à travers une fente (31) entre ailettes de roue mobile (18) et paroi intérieure (14) du corps de roue mobile (7) et imprime au corps de roue mobile (7) un mouvement de rotation par sollicitation des ailettes de roue mobile (18).

9. Procédé selon la revendication 8,
**caractérisé en ce que**
le tourbillon se tient dans une zone de tourbillon (13) du corps de roue mobile (7) située à rencontre de la direction de traversée (6) de sorte que l'eau reste un moment dans la zone de tourbillon (13) du corps de roue mobile (7) en forme d'entonnoir.

10. Procédé selon la revendication 8 ou 9,
**caractérisé en ce que**
par la circulation multiple de couches formant le tourbillon d'eau, le corps de roue mobile (7) en forme d'entonnoir, au niveau de son plus grand diamètre, dans lequel le mouvement de rotation du corps de roue mobile (7) est aussi pris, agit comme un volant d'inertie, sachant qu'une masse d'inertie relativement grande se crée du fait des couches superposées de sorte qu'une rotation stable du corps de roue mobile (7) en forme d'entonnoir ait lieu lors de la résistance de génératrice, sachant que l'eau présente dans le corps de roue mobile (7) en forme d'entonnoir ou ses couches riches en énergie délivrent d'abord leur énergie aux ailettes de roue mobile (18) et se déplacent ensuite à la façon d'un flot à rencontre de la direction de traversée (6) du dispositif de turbine (3) et ensuite vers l'axe de rotation (9), sachant que celles-ci s'écoulent ensuite vers la zone de sortie (29) du dispositif de turbine (3) de sorte que l'eau évacuée de cette manière accélère en raison de l'énergie potentielle présente entre la zone d'entrée (12) du dispositif de turbine (3) située à rencontre de la direction de traversée (6) et la zone de sortie (29).
